# EUROPEAN PATENT APPLICATION

(11) **EP 3 156 878 A1**
(43) Date of publication of application: **19.04.2017**
(21) Application number: 15306627.9
(22) Date of filing: 14.10.2015
(51) Int. Cl.: G06F 3/01

(54) **SMART PAN FOR REPRESENTATION OF PHYSICAL SPACE**

(71) Applicant: Ecole Nationale de l'Aviation Civile, 31400 Toulouse Cedex (FR)
(72) Inventor: Hurter, Christophe, 31000 TOULOUSE (FR)
(74) Representative: Nguyen Van Yen, Christian

(57) **Abstract**

An interaction mechanism is defined for the navigation of a representation of a physical space, whereby events or entities of interest outside the current view are detected, and flagged by adding a visual indicator at or near the edge of the view closest to the entity in question. By designating the visual indicator, for example with a mouse click or by directing the user's gaze at the visual indicator, the representation is prompted to modify the representation to include the space incorporating the entity of interest. The point of view may revert to the initial point of view on a further user action or after a predetermined time, or the original point of view may be flagged as a new entity of interest which the user may then select. Multiple points of interest may be defined such that the user may jump from point to point.

## Description

### Field of the invention

The present invention relates to graphical user interfaces representing physical space.

### Background of the invention

Since the development of radar during the 1930s, it has been desirable to find a means of graphically representing the physical space observed by the radar system to a user. Early systems used cathode ray oscilloscopes to represent certain characteristics of the signal for example in the A, B, E and H scopes, and eventually arrived at a two dimensional plan representation of the space being observed with the C-scope, oriented with respect to compass bearings and centred about the position of the display itself. This representation has been retained and developed ever since. Improvements in display and computer technologies have permitted the generation and display of increasingly rich information, including in particular representations of fixed features such as geographical elements, and dynamic features such as meta-data associated with objects identified by the system.

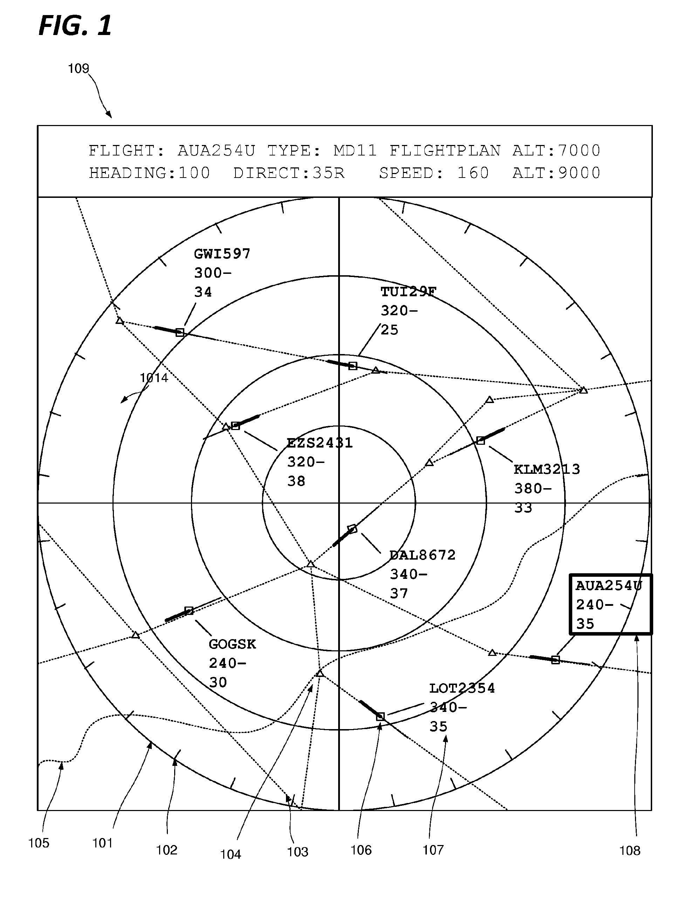

One important usage of such displays is in air traffic control. Figure 1 presents a typical air traffic control display. As shown in figure 1, there is presented a circular perimeter 101 divided by a reticule whose centre corresponds to the centre of this circular region, which is centred on a point of interest which may be the location of the display itself, and hence the user of the display. The circular region is furthermore divided by three progressively smaller circles sharing the axis of the circular perimeter 101. This circle represents a substantially cylindrical volume of space in the real word, as projected on the underlying ground, and accordingly is associated with a scale. The diameter of the smallest circle is one quarter of the diameter of the circular perimeter, the diameter of the second smallest circle is half that of the circular perimeter, and the diameter of the largest circle is three quarters of the diameter of the circular perimeter, so that these circles can be used to determine the distance of any item on the display from the point of interest. The four axes of the reticule conventionally correspond to the cardinal points of the compass, and as shown the circular perimeter is additionally provided with markings indicating 10 degree increments around the perimeter, so that the bearing of any object on the display with respect to the point of interest may also readily be determined. While the forgoing display features are generally static, there are furthermore shown a number of features that are dynamically generated. These include geographical features 105, representing for example features of the ground at the bottom of the volume under observation. Other features include predetermined flight paths 103 structured around way markers 104. Aircraft 106 are represented by small squares, and associated with lines indicating their current bearing. Information 107 associated with each plane is represented in the proximity of each aircraft.

The display shown in figure 1 is generally associated with a graphical user interface, which may permit the user to change the point of interest, or to obtain more information about a particular object shown in the representation. For example, where a user requires more detailed information about a particular aircraft, this may be selected as shown by the dark box 108, causing additional details associated with the same aircraft to be displayed in the box 109.

The activity of air traffic control is complex. The operators are involved in numerous interactions with computer systems dedicated to ensure the flow of air traffic in conditions of safety and optimization. The mouse is the main modality to interact with the different screens, while many alternatives exist.

It is desirable to provide transparent and intuitive mechanisms for manipulating such interfaces. It is similarly desirable to present at any time the information of most value to each user.

### Summary of the invention

In accordance with a first aspect, there is provided a method of managing a graphical representation of a selected physical space, the method comprising the steps of generating a graphical representation of a selected physical space lying within a larger space and displaying the representation. On receiving a notification of an of an entity of interest situated outside the selected physical space and within the larger space, the location of the entity of interest with respect to said selected physical space is determined. The representation is modified to add a graphical zone visible to the user, wherein the graphical zone is displaced from the centre of the zone in a direction corresponding to the orientation of said entity of interest with respect to said selected physical space, and responsive to a user designating said graphical zone via a user interface the selected physical space is redefined to correspond to a physical space in the larger space closer to the entity of interest, and the graphical representation regenerated accordingly.

This approach provides a highly intuitive mechanism whereby a user can be alerted to entities outside his current field of view, and when convenient shift his point of view to the entity in question. By effectively extending the user's field of awareness beyond the graphical representation, it may be possible to present a correspondingly smaller area to the user at any one time, reducing the need for large, high resolution displays, and thereby reducing graphics processing requirements and energy consumption. Ready and instinctive awareness of ongoing events outside the user's direct field of vision can improve the user's ability to anticipate emerging problems, and take remedial measures earlier than with conventional systems. Depending on context, this will translate into improved safety and reduced costs.

In accordance with a further development of the first aspect, the step of determining the location of the entity of interest comprises consulting a data source to obtain additional information concerning the entity of interest.

Retrieving additional information in this way generates additional synergies from the initial identification of the entity of interest, by opening the possibility of enriching the information presented to the user, and enabling him to make more informed decisions concerning whether and when to review the entity of interest, and in the case where several entities of interest are identified, in which order they should be reviewed. Prioritising the retrieval of additional information for entities of interest (over other objects for which further information may be available) optimises memory access and network bandwidth usage, and permits and optimised and streamlined presentation of information to the user.

In accordance with a further development of the first aspect, the step of redefining the selected physical space, the selected physical space is redefined as having its centre at the location of said entity of interest.

Situating the entity of interest at the centre of the redefined selected physical space, the user is able to identify and assess the entity of interest rapidly and without ambiguity, and take whatever further steps may be called for with a minimum of delay. Accordingly, the effectiveness of the user interface is improved.

In accordance with a further development of the first aspect, the step of the user designating the graphical zone via a user interface comprises a determination that the user has looked at the zone in question.

Determining a designation of the graphical zone by tracking the users gaze and determining that they have looked at the zone provides an exceptionally intuitive and streamlined mechanism for the user to review entities of interest. Using this mechanism, the review of information becomes almost transparent to the user, as they are continually presented with the information they need, whilst retaining control over the timing of their review of different entities, in a manner comparable to the manner in which individuals move their attention from point to point outside the context of graphical user interfaces.

In accordance with a further development of the first aspect, the step of the user designating the graphical zone via a user interface comprises a determination that the user has looked at the zone in question for a predetermined continuous duration.

By requiring that the user look at the zone in question for a predetermined continuous duration, it is possible to reduce false positives with regard to the designation of the graphical zone, thereby avoiding wasting the user's time and unnecessary processing effort.

In accordance with a further development of the first aspect, the step of the user designating said graphical zone via a user interface comprises a determination that the user has looked at the zone in question whilst providing a further confirmation via the user interface.

By requiring that the user provide an additional confirmation whilst looking at the zone in question for a predetermined, it is possible to reduce false positives with regard to the designation of the graphical zone, thereby avoiding wasting the user's time and unnecessary processing effort.

In accordance with a further development of the first aspect, the step of modifying the representation to add a graphical zone visible to the user comprises the additional step of generating a graphical zone whose appearance or location represents additional information concerning the entity of interest.

Defining the graphical zone so as to reflect additional information concerning the entity of interest generates additional synergies from the initial identification of the entity of interest, by enriching the information presented to the user, and enabling him to make more informed decisions concerning whether and when to review the entity of interest, and in the case where several entities of interest are identified, in which order they should be reviewed. Prioritising the retrieval of additional information for entities of interest (over other objects for which further information may be available) optimises memory access and network bandwidth usage, and permits and optimised and streamlined presentation of information to the user. Presenting this information by the rendering of the graphical zone means that the information can be more readily and intuitively be assimilated by the user.

In accordance with a further development of the first aspect, the method comprises the further steps of reverting the selected physical space to correspond to the physical space selected at the step of receiving a notification, and regenerating the graphical representation accordingly.

By providing a return mechanism, the advantages of the invention are compounded, since the same benefits accrue twice. The provision of an optimised return process ensures that the entire process of reviewing an entity of interest and return to the point of depart is as transparent and natural as possible, and represents a minimal distraction from the user's main focus of attention. The overall mechanism is as analogous as possible to glancing to one side in a non-IT setting.

In accordance with a further development of the first aspect, the step of reverting the selected physical space takes place after a predetermined time.

This provides a convenient mechanism for ensuring that the user is always safely returned to their original point of view.

In accordance with a further development of the first aspect, the step of reverting the selected physical space is triggered by a user action.

This provides a convenient mechanism for providing the user with full control over whether and when they return to the original point of view.

In accordance with a further development of the first aspect, after the step of redefining the selected physical space to correspond to a physical space in the larger space closer to the entity of interest, a new entity of interest corresponding to the initial selected physical space is generated, and the step of regenerating the graphical representation comprises generating a new graphical zone corresponding to the new entity of interest, and the step of reverting the selected physical space is triggered by a user designating the new graphical zone.

Not only does this approach provide a convenient mechanism for providing the user with full control over whether and when they return to the original point of view, it further expands the mechanism to potentially cover a network of entities of interest, whereby one is no longer dealing with the simple journey to the point of interest and back again, but rather can move amongst a shifting network of entities of interest, linked by a continually updated set of graphical zones indicated the destinations currently available from any current point of view. This provides a powerful mechanism for jumping amongst a number of hot points distributed across a large area.

In accordance with a second aspect, there is provided a computer program adapted to implement the steps of any preceding claim.

In accordance with a third aspect, there is provided a computer readable medium incorporating the computer program of the second aspect.

In accordance with a fourth aspect, there is provided an apparatus adapted to manage a graphical representation of a selected physical space, adapted to generate a graphical representation of the selected physical space, wherein the selected physical space lies within a larger space, and to cause a display to display said representation. The apparatus is further adapted to receive a notification of an entity of interest situated outside the selected physical space and within the larger space, and to determine the location of the entity of interest with respect to the selected physical space. The apparatus is further adapted to modify the representation to add a graphical zone visible to the user, wherein the graphical zone is displaced from the centre of the zone in a direction corresponding to the orientation of the entity of interest with respect to the selected physical space. The apparatus is then adapted to receive input from a user interface designating said graphical zone, and to redefining said selected physical space to correspond to a physical space in said larger space closer to said entity of interest, and to regenerate said graphical representation accordingly.

This approach provides a highly intuitive mechanism whereby a user can be alerted to entities outside his current point of view, and when convenient shift his point of view to the entity in question. By effectively extending the user's field of awareness beyond the graphical representation, it may be possible to present a correspondingly smaller area to the user at any one time, reducing the need for large, high resolution displays, and thereby reducing graphics processing requirements and energy consumption. Ready and instinctive awareness of ongoing events outside the user's direct field of vision can improve the user's ability to anticipate emerging problems, and take remedial measures earlier than with conventional systems. Depending on context, this will translate into improved safety and reduced costs.

### Brief Description of the Drawings

The above and other advantages of the present invention will now be described with reference to the accompanying drawings, in which:
Figure 1 presents a typical air traffic control display;
Figure 2 shows the steps of a method of managing a graphical representation of a selected physical space in accordance with an embodiment;
Figure 3 shows an embodiment from the perspective of a user;
Figure 4 shows a generic computing system suitable for implementation of embodiments of the invention;
Figure 5 shows a smartphone device adaptable to constitute an embodiment;
Figure 6 shows a vehicle adaptable to constitute an embodiment; and
Figure 7 shows a computer device adaptable to constitute an embodiment.

### Detailed description

In many use scenarios relating to a computer generated graphical representation of a physical space, and in particular in the case of an air traffic controller monitoring a designated air space, a user's attention will be primarily attached to one particular area of the graphical representation, but for a variety of reasons will be called upon to temporarily shift the focus of their attention, and correspondingly the graphical representation, to another area. Other examples include navigation aids such as GPS navigation devices and software, in particular where integrated with a vehicle, targeting interfaces for military hardware, tactical mapping, status monitoring for large installations (industrial, public transport, utilities, communications, etc,), site monitoring, situation management for law enforcement and other civic bodies, and so on.

The user will often then wish to revert to the original area of attention, and require the graphical representation to be updated accordingly.

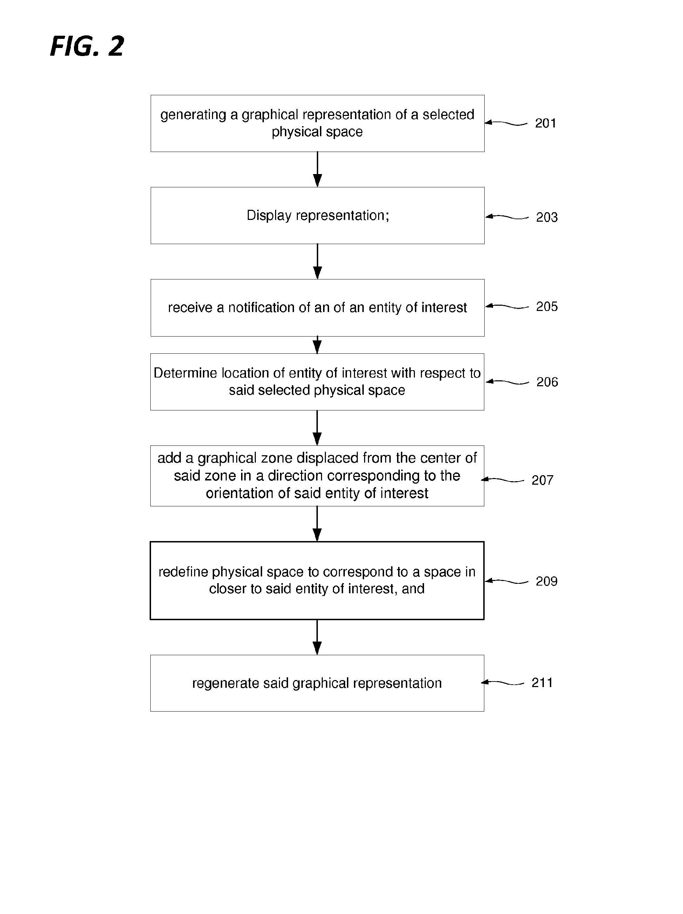

Figure 2 shows the steps of a method of managing a graphical representation of a selected physical space in accordance with an embodiment. As shown in figure 2, the method starts at step 201 at which a graphical representation of a selected physical space is generated. This selected physical space lies within a larger space. As such, the larger physical space may be the world, for example. Extending this embodiment to figure 1, the selected physical space would be the circular region of real space corresponding to the zone represented in the circular region on the screen. In other implementation, the selected space may be rectangular, or have any other form compatible with the display to be used. The size of the selected physical space will be determined by the area attributed for its display, multiplied by the scale to be used on the display at step 203 the representation is displayed. The representation itself may be generated from any suitable source including geographic data files, other predefined graphical elements or live video signals, or any combination of these or other data types.

The selected space, and the larger physical space may be two or three dimensional. The representation may also be two or three dimensional. Often, the representation with be a two dimensional representation of the surface of the earth, which is of course inherently three dimensional given the generally spherical form of the earth, and the variations in its diameter at different points on its surface. It is nevertheless common to represent portions of the earth's surface two dimensionally by applying a suitable projection, and disregarding local deviations from the average local diameter (hills, etc.).

The method then proceeds to step 205 at which a notification of an entity of interest outside said selected physical space and within said larger space is received.

In many such environments, the need for the user to temporarily shift the focus of their attention to a different region may be detected by an automated system. This detection may involve the detection of the event prompting the need for a shift of attention itself by the automated system, or may alternatively involve the detection of the notification of the user the event by other means.

In the first case, examples might involve a radar or other sensor system detecting the presence of an object in a particular space, or a traffic management system determining the possibility of a collision or other issue in that space.

In the second case, examples may involve the detection of an incoming message whether by electronic means or otherwise, which may be parsed to determine that its content indicates some issue. The incoming message may be electronic, for example a text based message such as an SMS or electronic mail, vocal, or encoded in any other manner. The message may also take an audible form, for example as an audible alarm, or a spoken message which may be proceed via speech recognition techniques to derive the notification information.

On receipt of the notification, the method proceeds to determine the location of the entity of interest with respect to the selected physical space is determined at step 206. In some cases it may be sufficient to merely determine the direction of the entity of interest with respect to the selected physical space, for example where the larger space is relatively small with respect to the entity of interest or the selected physical space. In other cases, it may be sufficient to determine only the general location of the entity of interest, for example to a level of granularity corresponding to the size of the selected physical space, so that when the selected physical space is redefined, it is certain to contain the entity of interest, somewhere in view. In other cases, it may be necessary to determine the exact location of the entity of interest, so that when the selected physical space is redefined it can be cantered precisely on the entity of interest. Where the graphical representation is three dimensional, it will generally be desirable to establish the location of the entity of interest in all three dimensions. Depending on the nature of the notification, this may be possible to a greater or lesser extent for each dimension. For example, it may be possible to determine latitude and longitude with good precision, but not altitude.

In some cases, once the notification is received, it may be necessary to consult other sources to complete the location determination, and possibly obtain additional complementary information. For example, the notification may contain only an identifier for the entity of interest, which may then be used to consult a database or other reference to obtain location information, status information, journey plans etc.

In the first case, examples might involve a radar or other sensor system detecting the presence of an object in a particular space, or a traffic management system determining the possibility of a collision or other issue in that space.

In the second case, examples may involve the detection of an incoming message whether by electronic means or otherwise, which may be parsed to determine that its content indicates some issue, and either determining the location of the event from the message contents, or deducing the location from other message characteristics, such as the location of the device originating the message.

The method then proceeds to step 207 of modifying the representation to add a graphical zone visible to the user, wherein the graphical zone is displaced from the centre of the zone in a direction corresponding to the orientation of said entity of interest with respect to said selected physical space.

Since the image displayed to the user is a representation of a physical space, it is inherently associated with a frame of reference built around directions. These may be expressed in terms of compass bearings as described with reference to figure 1, or by any other convenient means of describing directions, relative to any convenient frame of reference. Accordingly, when it is determined that an entity of interest is located to the North of the current selected space, the graphical zone indicating the direction of the entity of interest can be situated in whichever direction corresponds to North in the graphical representation. The graphical zone might be situated anywhere between the centre of the image and the northmost point of the image, and may indeed be positioned beyond the periphery of the selected physical space in a case where the graphical representation presented to the user comprises a margin which may be used for presenting other data besides the representation of the selected physical space.

The method next proceeds to step 209, at which, responsive to a user designating the graphical zone via a user interface, the selected physical space is redefined to correspond to a physical space in the larger space closer to said entity of interest.

The designation of the graphical zone may be carried out by means of conventional interface operations such as moving a cursor over the graphical zone with a mouse, trackerball or the like, and performing a "click" operation on the graphical zone, by touching the zone in question where the display has a touchscreen interface or the like, or by any other suitable graphical user interface operation. In particular, the system may make use of gaze tracking functionality, in which case the graphical zone can be considered to have been designated when the user is detected to have regarded the graphical zone, either momentarily or for a particular duration, or where they have regarded the graphical zone whilst performing some other confirmation action by means of a keypad, foot pedal, mouse button or the like.

Finally at step 211 the graphical representation is regenerated to reflect the new selected space.

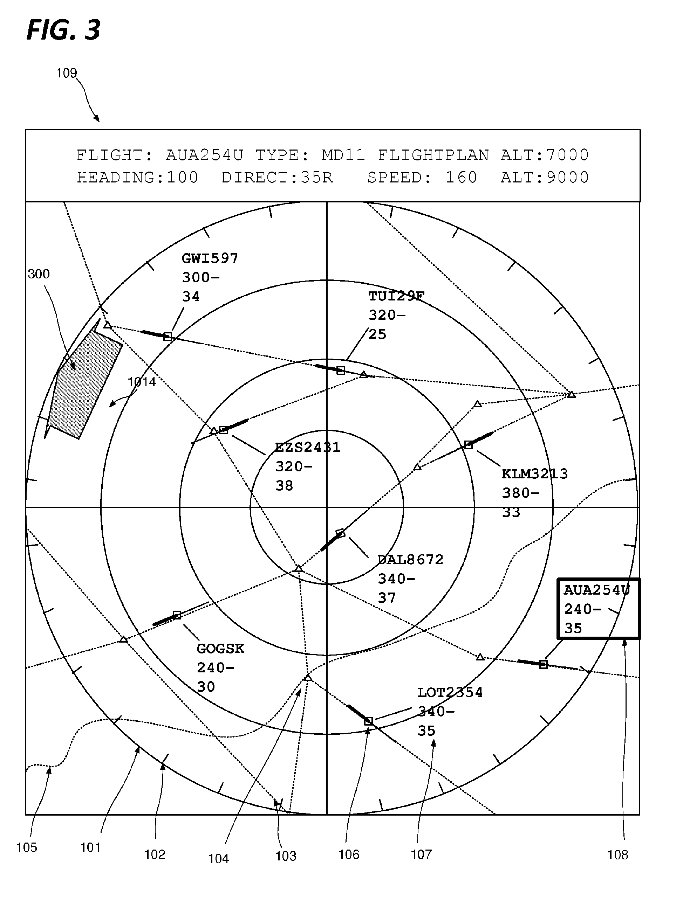

Figure 3 shows an embodiment from the perspective of a user. Figure 3 shows a graphical representation of a selected physical space similar to that of figure 1, and elements 101, 102, 103, 104, 105, 106, 107, 108 and 109 are identical to the correspondingly numbered elements of figure 1. Meanwhile, figure 3 also incorporates a graphical zone 300. As shown, the graphical zone 300 is a large arrow, situated in the upper left quadrant of the graphical representation and pointing outward, radially with respect to the centre of the graphical representation. Specifically, the arrow is pointing in a direction corresponding approximately to a bearing of 297 degrees, indicating to the user that an entity of interest is to be found in that direction. In accordance with the embodiment described with respect to figure 2, if the user wishes to obtain further information concerning the entity of interest, he designates the graphical zone 300.

In some implementations, the appearance of the graphical zone may be modified to provide additional information. For example, the size, colour, shape or position of the graphical zone may be modified to indicate the importance of the notification, the distance to the entity of interest, the nature of the notification, the age of the notification, etc. More particularly, a larger graphical zone might indicate a more important notification, and may become more brightly coloured as it becomes more urgent. The zone may be positioned at a distance from the centre of the selected area as a function of the distance of the entity of interest from the selected area. The shape of the graphical zone might be modified to reflect the nature of the notification, either to constitute an abstract symbol (star, arrow, circle etc) or to represent or otherwise reflect the nature of the entity of interest (lightning bolt, cloud, aeroplane, etc.)

When the graphical zone is designated, the selected physical space is redefined to correspond to a physical space in said larger space closer to the entity of interest, and the graphical representation regenerated accordingly.

The redefined selected physical space may be centered on the position of the entity of interest, or at some intermediate point between the initial selected physical space and the position of the entity of interest. A series of such intermediate positions may be adopted for the redefinition of the selected physical space in short succession, so as to simulate the effect from the point of view of a user of travelling from their starting position to the position of the entity of interest. This simulated journey may follow a direct line between the two points, or follow some other route, for example as dictated by available ground routes or flight paths.

In some cases, the entity of interest may in fact constitute a number of events or objects, which may be distributed across an area. Where this is the case, the redefined selected physical space may be the centre of this group, or at an extremity of the group closest to, or furthest away from the initial selected physical space, or otherwise as appropriate. In some cases it may be possible to weight or rank the elements constituting such a group, in which the redefined selected physical space may be the weighted centre of the group, or may centre on the first or last ranked member of the group.

In some cases, it may be desirable to change the scale of the representation of the selected physical space, so as to "zoom in" to an entity of interest whose small size means that a smaller scale of representation may be more appropriate, or to "zoom out" in the case of larger entities of interest. Where the entity of interest is a group of elements as described above, the scale may be redefined to ensure that all elements in the group are visible in the redefined selected physical space at the same time, or that a certain proportion are visible, possible taking into account weighting factors etc as discussed above. Where a series of intermediate selected physical spaces are selected, they may correspondingly adopt intermediate scales, so as to simulate a zooming effect.

In some cases, it may be desirable to change the orientation of the display. As shown in figure 3, the display is oriented with North at the top of the image, however in some cases it may be desirable to adopt some other orientation for example to better accommodate certain features in the same view, to align the orientation either along or against the direction of travel of the entity of interest, to align with some feature in the selected physical space such as a road, runway, border, coastline, etc., or otherwise. Where a series of intermediate selected physical spaces are selected, they may correspondingly adopt intermediate orientations, so as to simulate a progressive re-orientation. It will be appreciated that where the display is three dimensional, this reorientation may correspondingly take place about any axis.

Once the graphical representation is regenerated on the basis of the redefined selected physical space and displayed to the user, the system may further redefine the selected physical space to revert to the initial selected physical space. This may occur automatically after a predetermined time, or in response to an action by the user for example by means of conventional interface operations such as moving a cursor over a graphical user interface widget with a mouse, trackerball or the like, and performing a "click" operation, by touching the widget in question where the display has a touchscreen interface or the like, or by any other suitable graphical user interface operation. In particular, the system may make use of gaze tracking functionality, in which case the reversion may take place when the user is detected simply to look away from the entity of interest, or otherwise when the user is detected to have regarded a new graphical zone for a particular duration, or where they have regarded the graphical zone whilst performing some other confirmation action by means of a keypad, foot pedal, mouse button or the like. Still further, a simple action by means of a keypad, foot pedal, mouse button etc. may be sufficient in some cases to cause the system to revert to the initial selected physical space.

Alternatively, once the selected physical space has been redefined, a new entity of interest may be generated corresponding to the initial selected physical space. This will be indicated by a new graphical zone etc, and behave generally in accordance with the principles outlined above, so that if the user wishes to return to his original point of view, he merely need designate the corresponding graphical zone in the prescribed manner.

Once the system determines to revert to the initial selected physical space, this may be achieved progressively by means of a series of intermediate positions between the current selected physical space and the initial selected physical space, so as to simulate the effect from the point of view of a user of travelling from their entity of interest back to their starting position. This simulated journey may follow a direct line between the two points, or follow some other route, for example as dictated by available ground routes or flight paths. Where a particular path was followed from the initial selected physical space to the entity of interest, the same path may be followed in reverse back to the initial selected physical space, or not as desired.

Similarly, it may be desirable to change the scale of the representation of the selected physical space, in particular where the scale was changed between the representation of the initial physical space and the redefined physical space, so as to "zoom" to the scale in use for the initial selected space, so that the point of view at the end of the process is exactly the same as that at the beginning.

Similarly, it may be desirable to change the orientation of the display, in particular where the orientation was changed between the representation of the initial physical space and the redefined physical space. Where a series of intermediate selected physical spaces are selected, they may correspondingly adopt intermediate orientations, so as to simulate a progressive re-orientation. These orientations may correspond to the same set of orientations used in the initial redefinition of the selected physical space, or otherwise. In particular, this series of intermediate orientations may comprise the opposite orientations to those used in the initial redefinition of the selected physical space, so as to give the user the impression of facing in the direction of travel for example.

It will be appreciated that where the display is three dimensional, this reorientation may correspondingly take place about any axis.

In accordance with certain embodiments, there may be a plurality of graphical zones, corresponding to a plurality of entities of interest on display at any given time. When a user selects one of these to redefine the selected physical space, new graphical zones corresponding to the entities of interest not displayed may be calculated and added to the representation of the new selected physical space. In this case, the user may have an option of jumping to another entity of interest, rather than returning to his initial position.

In some cases, once an entity of interest has been reviewed, it may be cancelled, and removed from displays accordingly. In other embodiments, an entity of interest may be cancelled on a deliberate instruction from the user, or once a predefined time has elapsed. The lifetime of a given entity of interest may vary depending on the nature of the entity itself, or may be specified in the original notification. An entity of interest may be refreshed by a new notification.

Generally speaking, entities of interest will have a finite lifetime. This may be specified at the time of notification. Entities of interest may be cancelled when it is determined that they no longer exist, or their relevance has expired, or when they have been ignored for a predetermined period, or when then have been viewed by another user, or otherwise. Certain entities of interest may have an indefinite lifetime. For example, one or more "home positions" may be defined for a particular user, for which a graphical zone is always provided whenever the user is viewing a physical space other than that of the home position in question.

In some embodiments, entities of interest may be displayed in common to a plurality of users. Such embodiments may well also use some of the mechanisms described above with respect to the cancellation of entities of interest, either in such a way that any user cancelling an entity of interest causes the entity of interest to be cancelled for all users, or where a group of users, or all users must cancel the entity of interest before it is in fact cancelled.

In accordance with certain embodiments, there is provided an interaction mechanism defined for the navigation of a representation of a physical space, whereby events or entities of interest outside the current view are detected, and flagged by adding a visual indicator at or near the edge of the view closest to the entity in question. By designating the visual indicator, for example with a mouse click or by directing the user's gaze at the visual indicator, the representation is prompted to modify the representation to include the space incorporating the entity of interest. The point of view may revert to the initial point of view on a further user action or after a predetermined time, or the original point of view may be flagged as a new entity of interest which the user may then select. Multiple points of interest may be defined such that the user may jump from point to point.

The disclosed methods can take form of an entirely hardware embodiment (e.g. FPGA), an entirely software embodiment (for example to control a system according to the invention) or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or an instruction execution system.
A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a computer or any other device with processing capability, such as a robot or other connected device.

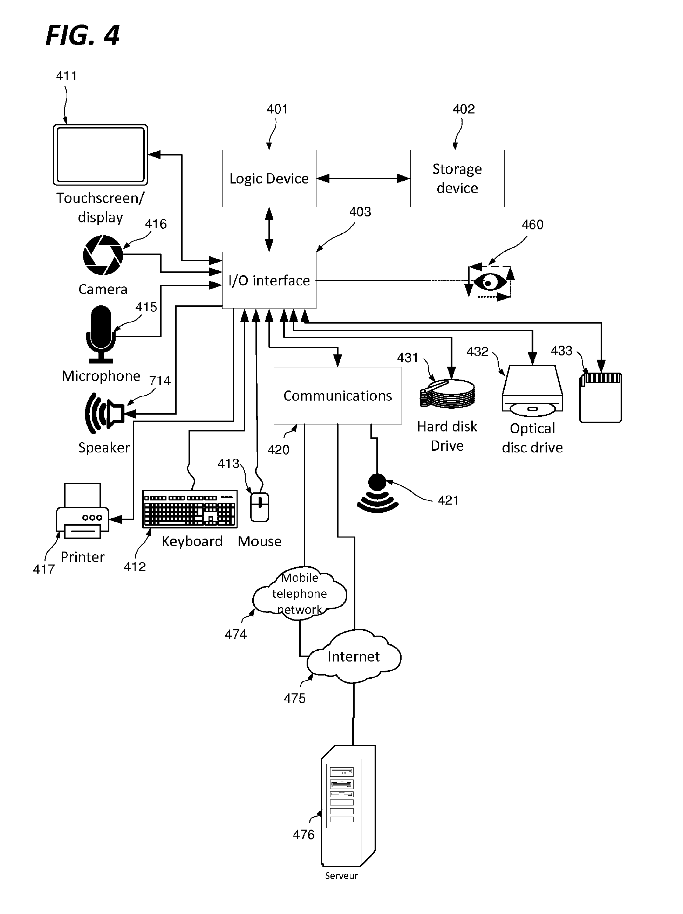

Figure 4 shows a generic computing system suitable for implementation of embodiments of the invention.

A shown in figure 4, a system includes a logic device 401 and a storage device 402. The system may optionally include a display subsystem 411, input subsystem 412, 413, 414, communication subsystem 420, and/or other components not shown.

Logic device 401 includes one or more physical devices configured to execute instructions. For example, the logic device 401 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 401 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 401 optionally may be distributed among two or more separate devices, which may be remotely located and/or configured for coordinated processing. Aspects of the logic device 401 may be virtualized and executed by remotely accessible, networked computing devices configured in a cloud-computing configuration.

Storage device 402 includes one or more physical devices configured to hold instructions executable by the logic device to implement the methods and processes described herein. When such methods and processes are implemented, the state of storage 402 device may be transformed-e.g., to hold different data.

Storage device 402 may include removable and/or built-in devices. Storage device 402 may comprise one or more types of storage device including optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage device may include volatile, nonvolatile, dynamic, static, read/write, read-only, random-access, sequential-access, location-addressable, file-addressable, and/or content-addressable devices.

In certain arrangements, the system may comprise an interface 403 adapted to support communications between the Logic device 401 and further system components. For example, additional system components may comprise removable and/or built-in extended storage devices. Extended storage devices may comprise one or more types of storage device including optical memory 432 (e.g., CD, DVD, HD-DVD, Blu-Ray Disc, etc.), semiconductor memory 433 (e.g., RAM, EPROM, EEPROM, FLASH etc.), and/or magnetic memory 431 (e.g., hard-disk drive, floppy-disk drive, tape drive, MRAM, etc.), among others. Such extended storage device may include volatile, nonvolatile, dynamic, static, read/write, read-only, random-access, sequential-access, location-addressable, file-addressable, and/or content-addressable devices.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 401 and storage device 402 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 4 may be used to implement embodiments of the invention.

For example a program implementing the steps described with respect to figure 2 may be stored in storage device 402 and executed by logic device 401. Data used for the creation of the graphical representation of the selected physical space, including data describing the larger space may be stored in storage 402 or the extended storage devices 432, 433 or 431. The Logic device may control the display 411 to display the representation at step 203. The Logic device may use data received from the keyboard 412 mouse 413, touchscreen 411, camera 416 or eye tracking system 460 to determine the designation of the graphical zone. The notification of an entity of interest may be received via the network connections 474, 475, via microphone 415 or camera 416, or otherwise.

Accordingly the invention may be embodied in the form of a computer program.

Furthermore, when suitably configured and connected, the elements of figure 4 may constitute an apparatus for generating. Such a system may be adapted to select a combination of an encoding algorithm and associated parameters from a memory (such as 402, 431, 432, 433 etc.) containing a plurality of a combination of encoding algorithm and parameters. The memory may further contain a respective encoding identifier associated with each combination. The system may further be adapted to define a URI having a hierarchical portion incorporating an identifier for said object encoded in accordance with said selected combination of algorithm and parameters, where the hierarchical portion further incorporates the encoding identifier corresponding to the selected combination of algorithm and parameters Such a system may further be adapted to encode the URI in a machine readable form. Furthermore, when suitably configured and connected, the elements of figure 4 may constitute an apparatus adapted to generate a graphical representation of a selected space, wherein said selected space lies within a larger space and wherein the size of said selected space is defined with regard to a predetermined scale. This apparatus may further be adapted to cause a display unit to display said representation. The apparatus may further be adapted to determine a point of attention of a user within said representation with reference signals received from an eye tracking system. The apparatus may further be adapted to redefine the selected space to correspond to a new selected space positioned with respect to and containing said point of attention responsive to receiving an input via a user interface, said new selected space being situated in the larger space, and the new selected space being defined at a new scale, and the apparatus may further be adapted to regenerate said graphical representation on the basis of said redefined selected space, and to cause said display unit to display said regenerated representation.

It will be appreciated that a "service", as used herein, is an application program executable across multiple user sessions. A service may be available to one or more system components, programs, and/or other services. In some implementations, a service may run on one or more server-computing devices.

When included, display subsystem 411 may be used to present a visual representation of data held by storage device. This visual representation may take the form of a graphical user interface (GUI). As the herein described methods and processes change the data held by the storage device 402, and thus transform the state of the storage device 402, the state of display subsystem 411 may likewise be transformed to visually represent changes in the underlying data. Display subsystem 411 may include one or more display devices utilizing virtually any type of technology. Such display devices may be combined with logic device and/or storage device in a shared enclosure, or such display devices may be peripheral display devices.

When included, input subsystem may comprise or interface with one or more user-input devices such as a keyboard 412, mouse 411, touch screen 411, or game controller (not shown). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, colour, stereoscopic, and/or depth camera for machine vision and/or gesture recognition; a head tracker, eye tracker 460, accelerometer, and/or gyroscope for motion detection and/or intent recognition; as well as electric-field sensing componentry for assessing brain activity.

When included, communication subsystem 420 may be configured to communicatively couple computing system with one or more other computing devices. For example, communication module of may communicatively couple computing device to remote service hosted for example on a remote server 476 via a network of any size including for example a personal area network, local area network, wide area network, or the internet. Communication subsystem may include wired and/or wireless communication devices compatible with one or more different communication protocols. As non-limiting examples, the communication subsystem may be configured for communication via a wireless telephone network 474, or a wired or wireless local- or wide-area network. In some embodiments, the communication subsystem may allow computing system to send and/or receive messages to and/or from other devices via a network such as the Internet 475. The communications subsystem may additionally support short range inductive communications 421 with passive devices (NFC, RFID etc).

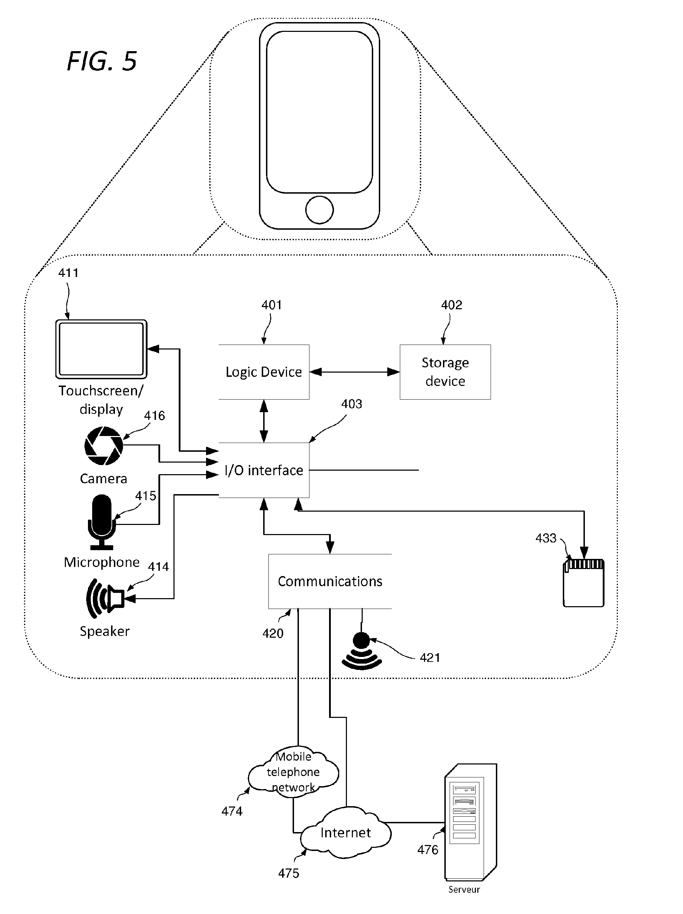

The system of figure 4 is intended to reflect a broad range of different types of information handling system. It will be appreciated that many of the subsystems and features described with respect to figure 4 are not required for implementation of the invention, but are included to reflect possible systems in accordance with the present invention. It will be appreciated that system architectures vary widely, and the relationship between the different sub-systems of figure 4 is merely schematic, and is likely to vary in terms of layout and the distribution of roles in systems. It will be appreciated that, in practice, systems are likely to incorporate different subsets of the various features and subsystems described with respect to figure 4. Figures 5, 6 and 7 disclose further example devices in accordance with the present invention. Those of ordinary skill in the art will appreciate that systems may be employed in the future which also operate in accordance with the present invention.

Figure 5 shows a smartphone device adaptable to constitute an embodiment. As shown in figure 4, the smartphone device incorporates elements 401, 402, 403, 420, 433, 414, 415, 416, 411 as described above. It is in communication with the telephone network 474 and a server 476 via the network 475. On the other hand, elements 431, 432, 417, 412, 413 are omitted. The features disclosed in this figure may also be included within a tablet device as well. In this embodiment, the dedicated eye tracking hardware 460 is omitted, and the device depends on the camera 716 with suitable software, for determining the point of regard.

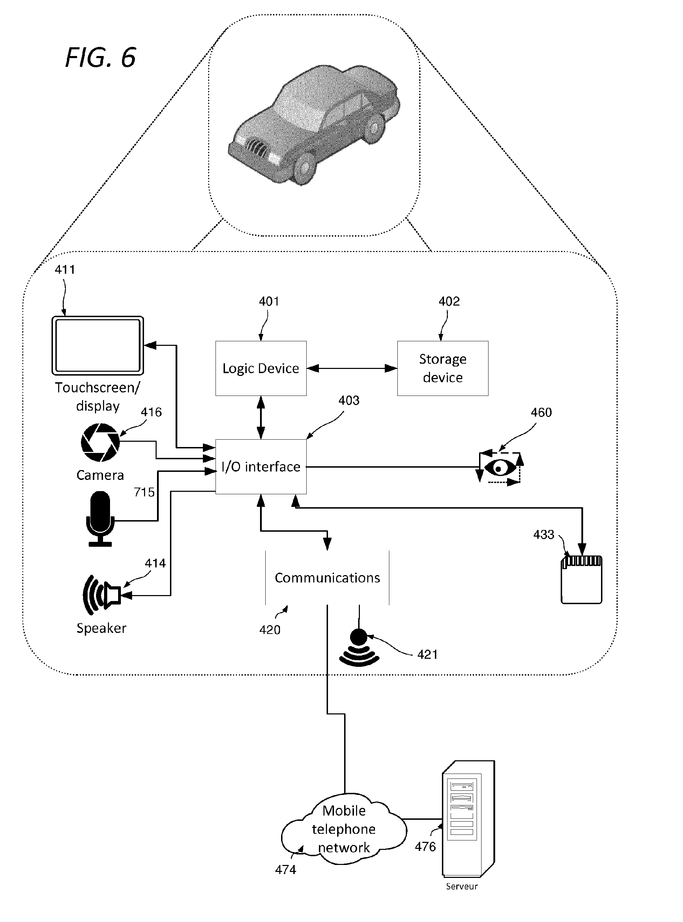

Figure 6 shows a vehicle adaptable to constitute an embodiment. As shown in figure 9, the vehicle comprises elements 401, 402, 403, 420,421, 433, 414, 415, 416, 460 and 421 as described above. It may be in communication with a server 476 via the mobile telephone network 474. On the other hand, elements 431, 432, 416, 417, 412, 413 and 475 are omitted.

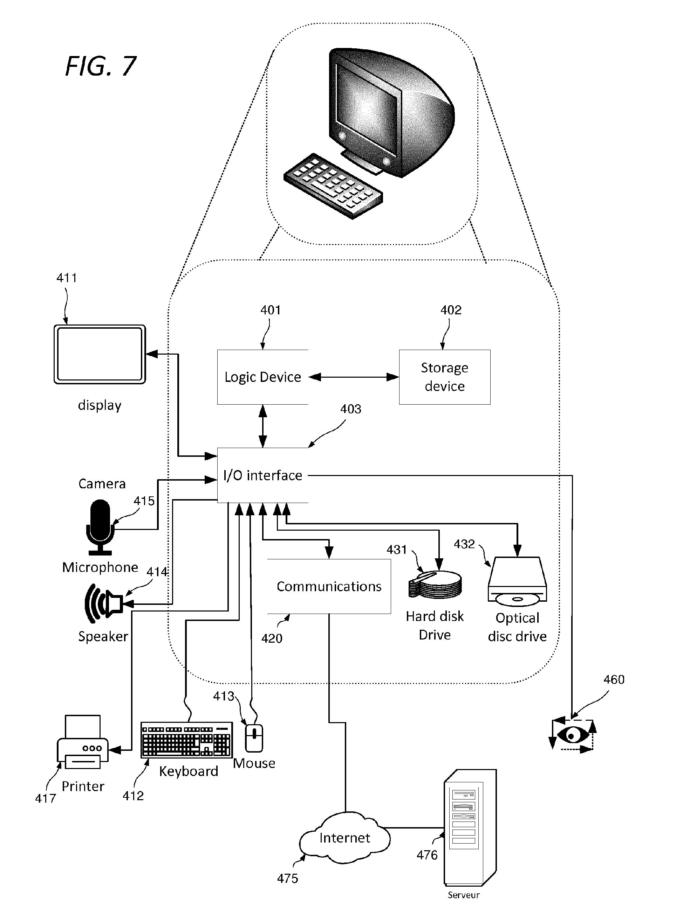

Figure 7 shows a computer device adaptable to constitute an embodiment. As shown in figure 7, the computer device incorporates elements 401, 402, 403, 420, 430, 431, 432, as described above. It is in communication with elements 414, 415, 417, 412, 460 and 413 as peripheral devices which may also be incorporated in the same computer device, and with a server 476 via the network 475. On the other hand, elements 433, 421 and 474 are omitted, and element 411 is an ordinary display with or without touchscreen functionality.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method of managing a graphical representation of a selected physical space, said method comprising the steps of:
generating a graphical representation of said selected physical space, wherein said selected physical space lies within a larger space;
displaying said representation;
receiving a notification of an entity of interest situated outside said selected physical space and within said larger space;
determining the location of said entity of interest with respect to said selected physical space,
modifying said representation to add a graphical zone visible to said user, wherein said graphical zone is displaced from the centre of said zone in a direction corresponding to the orientation of said entity of interest with respect to said selected physical space; and
responsive to a user designating said graphical zone via a user interface, redefining said selected physical space to correspond to a physical space in said larger space closer to said entity of interest, and regenerating said graphical representation accordingly.

2. The method of any preceding claim in wherein said step of determining the location of the entity of interest comprises consulting a data source to obtain additional information concerning said entity of interest.

3. The method of any preceding claim wherein at said step of redefining said selected physical space, said selected physical space is redefined as having its centre at the location of said entity of interest.

4. The method of any preceding claim in which said step of said user designating said graphical zone via a user interface comprises a determination that the user has looked at the zone in question.

5. The method of claim 4 in which said step of said user designating said graphical zone via a user interface comprises a determination that the user has looked at the zone in question for a predetermined continuous duration.

6. The method of claim 4 in which said step of said user designating said graphical zone via a user interface comprises a determination that the user has looked at the zone in question whilst providing a further confirmation via said user interface.

7. The method of any preceding claim wherein said step of modifying said representation to add a graphical zone visible to said user comprises the additional step of generating a graphical zone whose appearance or location represents additional information concerning the entity of interest.

8. The method of any preceding claim comprising the further steps of reverting said selected physical space to correspond to the physical space selected at said step of receiving a notification, and regenerating said graphical representation accordingly.

9. The method of claim 8 wherein said step of reverting said selected physical space takes place after a predetermined time.

10. The method of claim 8 wherein said step of reverting said selected physical space is triggered by a user action.

11. The method of claim 8 wherein after said step of redefining said selected physical space to correspond to a physical space in said larger space closer to said entity of interest, a new entity of interest corresponding to the initial selected physical space is generated, wherein said step of regenerating said graphical representation comprises generating a new graphical zone corresponding to said new entity of interest and wherein said step of reverting said selected physical space is triggered by a user designating said new graphical zone.

12. A computer program adapted to implement the steps of any preceding claim.

13. A computer readable medium incorporating the computer program of claim 12.

14. An apparatus adapted to manage a graphical representation of a selected physical space, said apparatus being adapted to generate a graphical representation of said selected physical space, wherein said selected physical space lies within a larger space, and to cause a display to display said representation;
said apparatus further adapted to receive a notification of an entity of interest situated outside said selected physical space and within said larger space, and to determine the location of said entity of interest with respect to said selected physical space; said apparatus being further adapted to modify said representation to add or change a graphical zone visible to said user, wherein said graphical zone is displaced from the centre of said zone in a direction corresponding to the orientation of said entity of interest with respect to said selected physical space; and
wherein said apparatus is adapted to receive input from a user interface designating said graphical zone, and to redefine said selected physical space to correspond to a physical space in said larger space closer to said entity of interest, and to regenerate said graphical representation accordingly.
